Europäisches Patentamt

European Patent Office

Office européen des brevets

(19)

(11) Numéro de publication : **0 113 639**
**B1**

(12) FASCICULE DE BREVET EUROPÉEN

(45) Date de publication du fascicule du brevet :
06.05.87

(51) Int. Cl.⁴ : **H 04 L 11/20**

(21) Numéro de dépôt : 83460005.8

(22) Date de dépôt : 22.12.83

(54) Système de commutation de paquets synchrones de longueur fixe.

(30) Priorité : 29.12.82 FR 8222226

(43) Date de publication de la demande :
18.07.84 Bulletin 84/29

(45) Mention de la délivrance du brevet :
06.05.87 Bulletin 87/19

(84) Etats contractants désignés :
BE CH DE GB IT LI NL SE

(56) Documents cités :
EP-A- 0 042 329
US-A- 3 979 733
NATIONAL TELECOMMUNICATIONS CONFERENCE,
vol. 2, paper 28.4, 3-6 décembre 1978, Birmingham
(US). D. W. BROWN et al.: "A micro-processor based
communications multiplexer/concentrator", pages
28.4.1-28.4.5

(73) Titulaire : **Servel, Michel**
**Le Rhu en Servel**
**F-22300 Lannion (FR)**

**Thomas, Alain**
**Ar Santé L 322**
**F-22300 Lannion (FR)**

(72) Inventeur : **Servel, Michel**
**Le Rhu en Servel**
**F-22300 Lannion (FR)**
Inventeur : **Thomas, Alain**
**Ar Santé L 322**
**F-22300 Lannion (FR)**

(74) Mandataire : **Le Guen, Louis François**
**Cabinet Louis Le Guen 1, avenue Edouard VII B.P. 91**
**F-35802 Dinard Cédex (FR)**

Jouve, 18, rue St-Denis, 75001 Paris, France

## Description

La présente invention concerne un système de commutation de multiplex de paquets de longueur fixe synchrones. Plus particulièrement, l'invention concerne un système de commutation de paquets utilisables pour traiter des services très divers dont les débits peuvent aller de quelques bits par seconde à plusieurs millions de bits par seconde.

A titre d'exemple, un multiplex de paquets de longueur fixe synchrones est décrit dans le document EP-A-0 108 028 intitulé « Système de synchronisation de multiplex numériques de paquets ». Dans ce multiplex, les paquets sont des blocs de données de longueur fixe de N octets, avec, à titre d'exemple, N = 16. Le premier octet du paquet est l'étiquette qui permet d'identifier le paquet sur le multiplex. Les quinze octets suivants transportent l'information utile proprement dite. Le support du multiplex est lui-même structuré en intervalles de temps de longueur fixe égale à celle d'un paquet. Un intervalle de temps peut être vide, quand il ne contient pas de paquet, ou occupé, quand il en contient un. Dans le premier cas, l'octet du créneau correspondant à l'étiquette a la valeur zéro alors que, dans le cas d'un intervalle de temps occupé, cette valeur est prise dans l'ensemble des 255 combinaisons restantes.

Dans un multiplex MIC de circuits, les intervalles de temps sont identifiés, d'une manière implicite, par leurs positions dans chaque trame de multiplex. Dans un multiplex de paquets du type mentionné ci-dessus, chaque paquet occupe aussi un intervalle de temps constant, mais qui est repéré par un adressage explicite sur 8 éléments binaires. Dans le commutateur suivant l'invention qui va être décrite dans la suite, on utilise cette analogie dans la conception d'un commutateur de multiplex de paquets synchrones.

A titre indicatif, les commutateurs temporels utilisés pour commuter des voies téléphoniques numériques de multiplex à n voies, sont décrits dans l'ouvrage « La commutation électronique » de GRINSEC, pages 247 à 252. Dans ces commutateurs temporels, la fonction commutation consiste à pouvoir aiguiller le contenu de n'importe quel intervalle de temps d'un multiplex d'entrée MUXEi vers n'importe quel intervalle de temps d'un multiplex de sortie quelconque MUXSj. Notamment, dans les commutateurs temporels à commande par la sortie, qui peuvent assurer la fonction diffusion, les intervalles de temps entrant sont rangés dans une mémoire tampon à un emplacement parfaitement défini. Une mémoire de commande, programmée lors des établissements de communications, associe à chaque voie sortante l'adresse dans la mémoire tampon de l'intervalle de temps dont le contenu devra être transféré sur cette voie sortante. L'ensemble des voies sortantes est exploré cycliquement et la mémoire de commande est également lue cycliquement.

Dans le commutateur suivant l'invention, prévu pour commuter des paquets synchrones, les paquets sont considérés comme des intervalles de temps à adressage explicite, ce qui permet d'y utiliser des fonctions existantes dans les commutateurs temporels de circuits à commande par la sortie. La fonction commutation de paquets consiste essentiellement à associer à chaque paquet entrant, identifié par son numéro de multiplex entrant parmi plusieurs et son étiquette, une nouvelle identification elle-même caractérisée par deux attributs de même type, c'est-à-dire une nouvelle étiquette et le numéro du multiplex sortant parmi plusieurs qui va délivrer le paquet. Sous une autre forme, on commute le paquet (e, i), où e est le numéro du multiplex entrant et i l'étiquette, en un paquet sortant (s, j), où s est le numéro du multiplex sortant et j la nouvelle étiquette.

Dans cette commutation de paquets, une première action doit être entreprise sur le paquet (e, i) avant son rangement dans la mémoire tampon, cette action consistant en une « conversion d'étiquette » qui correspond à une permutation d'intervalle de temps en commutation temporelle de circuits. Cette conversion est effectuée par une mémoire de commande, qui a été programmée lors de l'établissement de la communication par paquets. Ainsi, l'étiquette i est remplacée par l'étiquette j. Le paquet (e, j) est alors rangé dans la mémoire tampon à une adresse connue, fonction de l'instant d'écriture défini par e. Cette adresse est stockée dans une file d'attente associée au multiplex sortant s. Comme le système est commandé par la sortie, au cours du cycle d'exploration des multiplex sortant, la file d'attente associée au multiplex sortant s est explorée pour délivrer l'adresse du prochain paquet que le multiplex sortant s aura à porter. Comme en commutation temporelle de circuits, l'information formant le paquet est rangée dans la mémoire tampon.

Par ailleurs, dans le document US-A-3 979 733, il est décrit un commutateur temporel de paquets recevant, par une jonction entrante unique, un multiplex à intervalles de temps cycliques contenant chacun un paquet et délivrant, par une jonction sortante unique un multiplex à intervalles de temps cycliques contenant également chacun un paquet, la commutation consistant à changer, si nécessaire, pour chaque paquet, le rang de l'intervalle de temps entre le multiplex entrant et le multiplex sortant. Dans ce document, on commute le paquet (e, i), où e est le numéro de l'intervalle de temps entrant et i l'étiquette de routage, en un paquet sortant (s, j), où s est le numéro de l'intervalle de temps sortant et j la nouvelle étiquette. Dans ce document, les paquets sont traités sous forme série pendant le changement d'étiquette, puis placés dans des files d'attente individuelles correspondant respectivement aux intervalles de temps sortants.

Dans le document US-A-3 979 733, le traitement série des paquets limite considérablement la capacité de commutation car les circuits de traitement ont des vitesses limitées. C'est pourquoi il est préférable de mettre en parallèle chaque paquet complet, avant l'écriture en mémoire tampon, comme dans un commutateur temporel de circuits. Dans ces derniers, chaque voie est un mot de huit bits et les convertisseurs série-parallèle à huit bits sont actuellement suffisamment rapides pour ces commutateurs de circuits. En ce qui concerne la commutation de paquets, chaque paquet comprend évidemment plusieurs octets et, par exemple, seize octets, comme il est décrit dans le document EP-A-0 108 028 mentionné ci-dessus. La conversion série-parallèle d'un paquet entier demande donc un temps relativement long.

Par ailleurs, dans un commutateur de paquets, les paquets entrants, une fois leurs octets convertis en parallèle, transitent pratiquement toujours dans des mémoires servant de files d'attente qui sont réalisées au moyen de mémoires FiFo ou « premier entré — premier sorti ».

Dans un tel commutateur, le convertisseur série-parallèle de la file d'octets travaille avec une seule file d'attente d'entrée, c'est-à-dire une seule jonction d'entrée, à la fois, l'ensemble des files d'attente d'entrée devant être traité au cours d'un cycle complet dont la durée est celle de la transmission d'un paquet en série. Or, les mémoires FiFo constituant les files d'attente sont des éléments relativement lents. Le passage d'un paquet en parallèle nécessite 16 accès à la file d'attente concernée, il est donc excessivement long et, dès lors, limite la capacité de traitement de l'ensemble. A la sortie, avec le convertisseur parallèle-série, on retrouve la même lenteur relative.

Un objet de l'invention consiste donc à remédier à cette lenteur de manière à obtenir d'une matrice de commutation de paquets des performances compatibles avec les débits des services de vidéocommunications.

La solution mise en œuvre, suivant l'invention, pour éviter la perte de temps mentionnée, consiste à remplacer la conversion série-parallèle des files d'octets par une succession de permutations simultanées d'octets pour l'ensemble des multiplex entrants et une autre succession de permutations simultanées d'octets pour l'ensemble des multiplex sortants. La logique de commande, qui comprend la seule mémoire de commande, n'étant capable d'analyser qu'une seule étiquette par temps d'octet, il est prévu que les étiquettes des différents paquets s'enchaînent de manière temporellement décalée. Ceci est obtenu en assurant dans les files d'attente d'entrée un déphasage temporel de 1 octet d'une file à la suivante. Le convertisseur série-parallèle est remplacé par une matrice de rotation permettant d'effectuer une rotation commandable sur des groupes de N octets (16 octets). L'ordre de la rotation progresse d'un pas à chaque « temps octet ». En sortie de la matrice de rotation, les informations se présentent sous une forme dite « parallèle-diagonale », qui s'expliquera complètement dans la suite. Les informations sont rangées sous cette forme dans la mémoire tampon. Le convertisseur parallèle-série est lui-même formé d'une matrice de rotation à commande cyclique effectuant les décalages dans le sens inverse de la matrice d'entrée.

L'objet de l'invention mentionné ci-dessus, ainsi que d'autres, sont atteints par la mise en œuvre de combinaisons de moyens définies dans les revendications complétant la présente description.

Les caractéristiques de l'invention mentionnées ci-dessus, ainsi que d'autres, apparaîtront plus clairement à la lecture de la description suivante d'exemples de réalisation, ladite description étant faite en relation avec les dessins joints, parmi lesquels :

la Figure 1 est le schéma d'une matrice de commutation de paquets,

la Figure 2 est le schéma d'un circuit d'entrée utilisé dans la matrice de la Fig. 1,

les Figures 3a à 3f sont des formes d'onde illustrant le fonctionnement du circuit de la Fig. 2,

la Figure 4 est un schéma illustrant le fonctionnement d'une variante de matrice de commutation suivant l'invention,

la Figure 5 est un diagramme illustrant les positions relatives des multiplex d'entrée avant le passage dans la matrice de rotation d'entrée,

la Figure 6 est un diagramme illustrant les positions des multiplex après le passage dans la matrice de rotation d'entrée,

la Figure 7 est un diagramme illustrant la position des multiplex après le passage dans la matrice de rotation de sortie,

la Figure 8 est le schéma d'une matrice de commutation suivant l'invention,

les Figures 9 et 10 sont des schémas de circuits de transfert utilisés dans la matrice de la Fig. 8,

la Figure 11 est le schéma d'un concentrateur suivant l'invention,

la Figure 12 est le schéma du circuit de gestion des demandes du concentrateur de la Fig. 11,

la Figure 13 est le bloc-diagramme d'un étage de commutation utilisant le principe de la matrice de commutation suivant l'invention,

la Figure 14 est le schéma d'un circuit de l'étage de la Fig. 13,

la Figure 15 est un schéma détaillé d'une partie du circuit de la Fig. 14, et

la Figure 16 est un diagramme de temps relatif au fonctionnement de la partie de circuit de la Fig. 15.

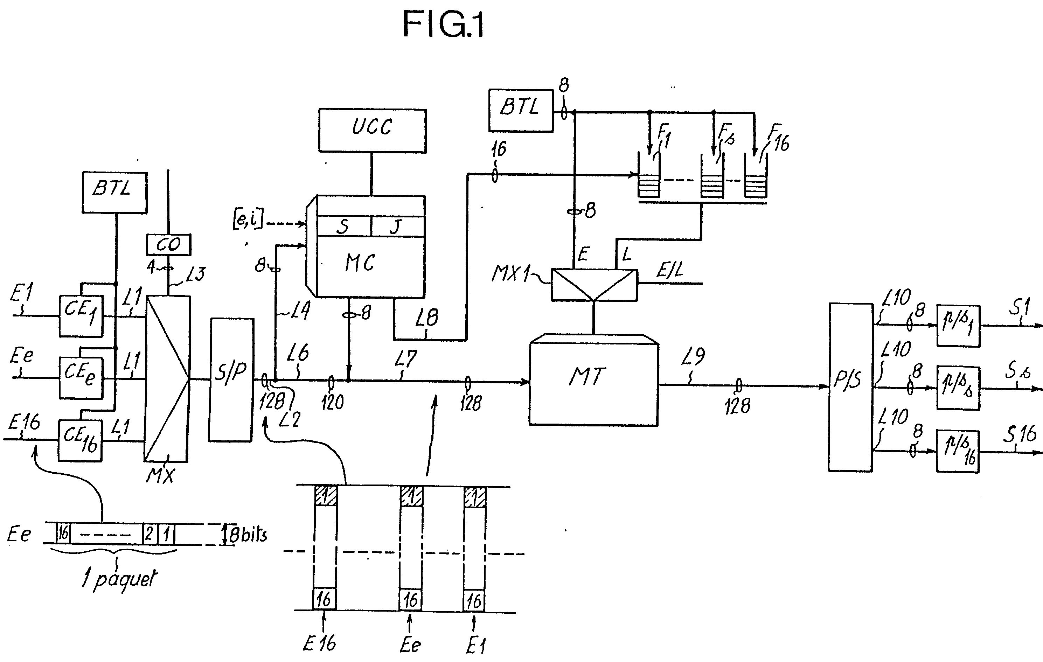

Le bloc-diagramme de la Fig. 1 montre un exemple de réalisation d'une matrice de commutation permettant de mieux comprendre le fonctionnement du commutateur temporel de paquets suivant l'invention. Les paquets arrivant sur les jonctions E1 à E16 sont à commuter pour être transmis sur les jonctions S1 à S16. Chaque jonction E1 à E16, transmettant un train binaire, est reliée à l'entrée d'un circuit d'entrée CE1 à CE16.

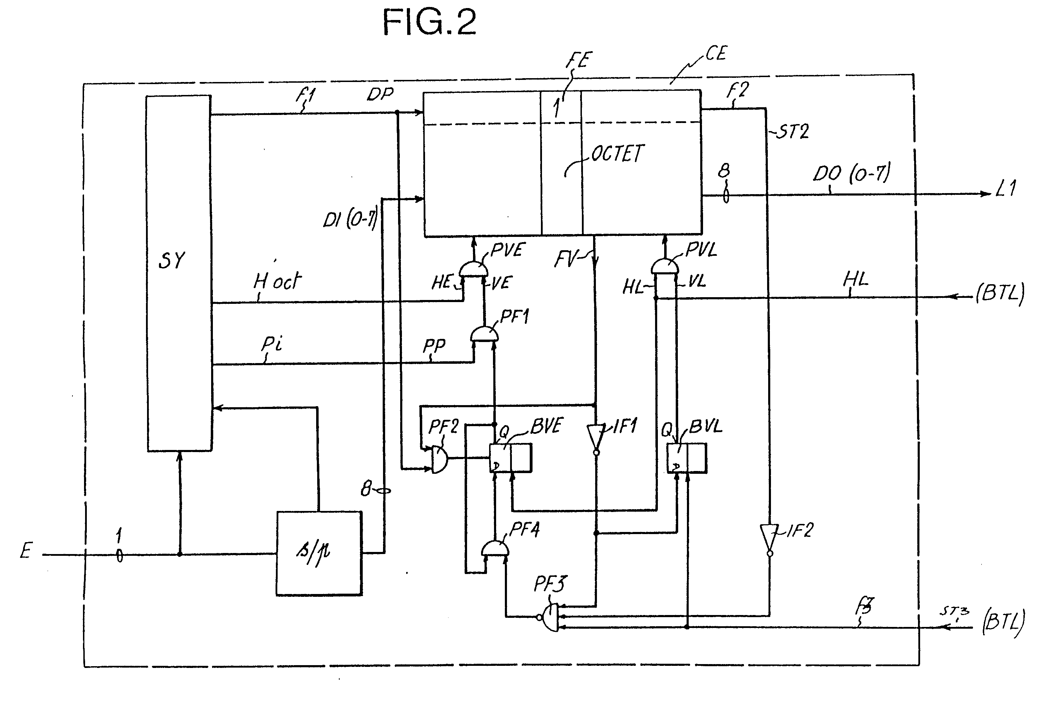

Dans chaque circuit d'entrée CE, Fig. 2, la jonction d'entrée E est reliée à l'entrée d'un convertisseur série-parallèle s/p qui délivre des octets parallèles et dont la sortie est reliée, par une liaison à huit fils D10 à D17, à l'entrée d'une file d'attente FE de type premier entré-premier sorti (FiFo en terminologie anglo-saxonne). En dérivation sur l'entrée de chaque convertisseur s/p, est monté un circuit de synchronisation SY qui analyse le train entrant et qui délivre, premièrement, sur un fil Hoct, la synchronisation octet HE, deuxièmement, sur un fil f1, un signal DP de niveau « 1 » chaque fois que l'octet délivré à la file d'attente est un octet de début de paquet et, troisièmement, sur un fil Pi, un signal PP de niveau « 1 » chaque fois que le paquet en cours n'est pas vide. Le fil Hoct est relié à une entrée de commande du convertisseur s/p.

Le fil f1 est relié à une entrée de données de la file FE. La mémoire file FE contient une suite de mots de neuf bits chacun et l'ensemble des files des circuits CE1 à CE16 sert à « aligner » les multiplex. Chaque file doit avoir une taille supérieure à 16 mots de 9 bits. En pratique, les circuits CE1 à CE16 constituent des moyens de décalage dans le temps des multiplex entrants E1 à E16, de façon à ce que les en-têtes des différents multiplex sortant des circuits CE1 à CE16 soient délivrés simultanément, soit au contraire séquentiellement comme on le verra dans la suite.

Comme le montre la Fig. 2, les entrées de données de la file FE sont reliées aux fils de sortie D10 à D17 du convertisseur s/p et au fil f1 de sortie du circuit de synchronisation SY. Son entrée d'horloge d'écriture est reliée à la sortie d'une porte ET PVE qui a sa première entrée reliée au fil Hoct.

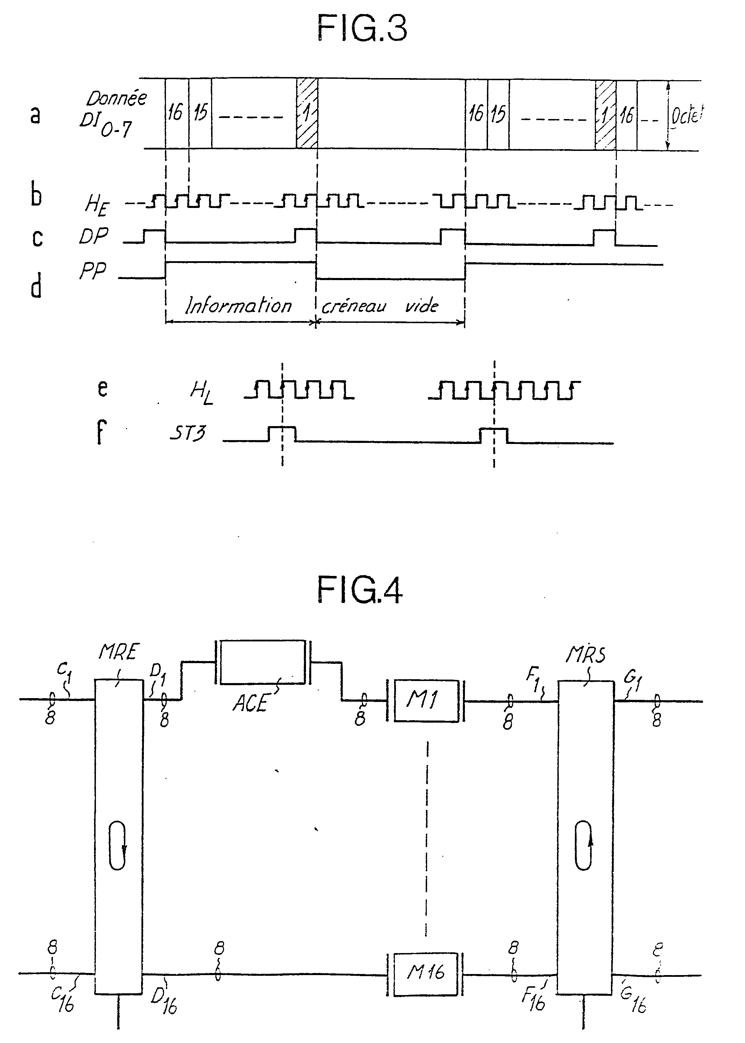

On a représenté aux Fig. 3a à 3d les différents signaux présents sur les fils D10 à D17, Hoct, f1 et Pi, respectivement.

Par ailleurs, les sorties de données de la file FE sont reliées à huits fils D00 à D07, transmettant les données utiles, et à un fil f2 transmettant un signal ST2 de début de paquet et qui est l'équivalent en sortie de file de DP. L'entrée d'horloge de lecture est reliée la sortie d'une porte ET PVL qui a sa première entrée reliée à une sortie HL d'une base de temps locale BTL, cette horloge étant plésiochrone de l'horloge HE. La seconde entrée de la porte ET PVE constitue une entrée de validation d'écriture VE, tandis que la seconde entrée de la porte ET PVL constitue une entrée de validation de lecture VL. La file FE comporte encore une sortie d'indication de file vide FV, qui est à « 1 » uniquement quand la file est vide.

L'entrée de validation d'écriture VE est reliée à la sortie d'une porte ET PF1 dont la première entrée est reliée au fil Pi et la seconde entrée à la sortie Q d'une bascule BVE du type D. L'entrée de mise à « 1 » de la bascule BVE est reliée à la sortie d'une porte ET PF2 dont la première entrée est reliée au fil f1 et la seconde à la sortie FV qui est à « 1 » quand la file FE est vide. Son entrée D est reliée à la sortie d'une porte NON-ET à trois entrées PF3, par l'intermédiaire d'une porte ET PF4 dont l'autre entrée est reliée à la sortie Q de la bascule BVE. Ainsi, la bascule BVE ne peut être mise à « 1 » que par le signal de sortie de la porte PF2. La porte PF3 a une première entrée reliée à la sortie d'un inverseur IF1 dont l'entrée est reliée à la sortie FV, une seconde entrée reliée à la sortie d'un inverseur IF2 dont l'entrée est reliée au fil f2, et une troisième entrée reliée à la sortie de la base de temps BTL, par un fil f3. L'entrée d'horloge de la bascule BVE est reliée à la sortie d'horloge H1 de BTL.

Les signaux émis par les sorties HL de la base de temps BTL et sur le fil f3 sont respectivement montrés aux Fig. 3e et 3f. Il y apparaît que le signal ST3, sur le fil f3, est un signal local de synchronisation de trame, c'est-à-dire émis tous les seize impulsions HL. En pratique, l'impulsion ST3 a une largeur égale à la période de HL, mais est avancée d'une demi-période avant une lecture effective commandée par HL. Cette garde d'un demi-temps d'octet permet de tolérer une dérive négative durant la lecture du paquet.

L'entrée de validation de lecture VL est reliée à la sortie Q d'une bascule BVL dont l'entrée D est reliée à la sortie de l'inverseur IF1 et l'entrée d'horloge au fil f3.

En fonctionnement normal, la bascule BVE est à l'état « 1 » et les signaux f2 et f3 sont synchrones, lorsque la file n'est pas vide. La porte PF3 a sa sortie à « 1 » et la sortie Q de BVE est à « 1 ». La sortie de la porte PF1 étant à « 1 », on valide l'écriture des paquets dans la file au rythme de l'horloge d'écriture. La file FE n'étant pas vide, l'entrée D de la bascule BVL est à « 1 ». Donc, l'entrée d'horloge f3 de BVL valide la lecture de la file pour la durée de la trame suivante. En pratique, le signal sur le fil f1 progresse dans la file FE parallèlement au premier octet de données avec lequel il a été chargé.

Si, au moment du signal sur f3, le signal sur f2 est absent, la file n'étant pas vide, la sortie de la porte PF3 passe à l'état « 0 », qui est transmis par la bascule BVE à l'entrée de validation d'écriture. Il en résulte que l'écriture est inhibée.

La lecture de la file se poursuit tant que la file n'est pas complètement vide, c'est-à-dire que la sortie de l'inverseur IF1 est à « 1 ». Quand la file a été vidée, la lecture est interrompue au prochain signal sur le fil f3.

La file étant vide, la bascule BVE, qui était bloquée à l'état « 0 », ne peut plus être remise à « 1 » que quand le fil d'entrée f1 passe à l'état « 1 » au début d'un nouveau paquet. Dès son changement d'état, l'écriture peut reprendre à la condition que le nouveau paquet ne soit pas vide, ce que l'on va supposer. Dans la mémoire file FE, le premier octet écrit du paquet est pratiquement immédiatement disponible à la sortie de la file, avec un bit « 1 » présenté au fil f2. Par ailleurs, la file n'est plus vide. Donc, dès le signal ST3 sur f3, la lecture est déclenchée par BVL et PVL, et, d'autre part, la porte PF3 confirme le fonctionnement normal.

Quand un paquet vide est détecté par le circuit SY, le signal PP est à « 0 », ce qui inhibe l'écriture.

Les jonctions E1 à E16 étant reliées à des points d'origine divers, à priori non synchronisés, les étiquettes ou en-têtes des paquets qu'elles transportent entrent à des temps d'octet divers dans les files d'attente des circuits d'entrée CE1 à CE16. Donc, initialement, les étiquettes des paquets n'ont aucune raison d'être lues simultanément aux sorties de ces files. La circuiterie logique de la Fig. 2 permet d'obtenir l'alignement des lectures dans les files sur la référence externe délivrée sur f3. En effet, comme on l'a vu plus haut, la sortie f3 de la base de temps BTL impose les moments de lecture des premiers octets de paquets dans les files.

Les huit sorties D00 à D07 des circuits CE1 à CE16 sont respectivement reliées par des liaisons à huit fils L1 aux entrées correspondantes d'un multiplexeur MX dont la sortie est reliée à l'entrée d'un convertisseur série-parallèle S/P, Fig. 1. Le convertisseur S/P a pour rôle de présenter chaque paquet entrant complet sur une liaison de sortie L2 à 128 fils. Un compteur par seize CO a sa sortie à quatre fils L3 reliée à l'entrée de commande du multiplexeur MX. A l'aide du compteur CO, le multiplexeur MX explore successivement les sorties des files d'attente des circuits d'entrée si bien que, sur la liaison L2, les paquets se suivent, comme on l'a illustré à la Fig. 1, un paquet E1 provenant de la jonction E1 précédant un paquet E2 provenant de la jonction E2 et ainsi de suite cycliquement. Dans la liaison L2, les huit premiers fils transportent l'octet d'étiquette et sont reliés par la liaison L4 à l'entrée d'adressage d'une mémoire de commande MC à accès aléatoire. La sortie de données de la mémoire de commande MC se compose de 24 fils dont les huit premiers forment une liaison à huit fils L5. Les 120 derniers fils de la liaison L2 forment la liaison L6 qui, associée à la liaison L5, forme une liaison à 128 fils L7 qui contient la nouvelle étiquette j du paquet. La liaison L7 est reliée à l'entrée de données d'une mémoire de paquets MT.

Les seize derniers fils de sortie de la mémoire de commande MC forment une liaison L8 qui transporte l'identification du ou des fils de sortie S par lequel le paquet concerné doit être transmis. La liaison L8 est reliée aux entrées de commande d'écriture de files d'attente F1 à F16 dont les entrées de données sont reliées à la sortie d'une base de temps BTL. La sortie de la base de temps BTL est également reliée à l'entrée d'écriture E d'un multiplexeur MX1 dont la sortie est reliée à l'entrée d'adresse de la mémoire tampon MT. L'entrée de lecture L du multiplexeur MX1 est reliée aux sorties des files d'attente F1 à F16. Enfin, l'entrée de commande d'écriture-lecture E/L du multiplexeur MX1 est reliée à une sortie H de la base de temps BTL.

La sortie de la mémoire tampon MT est reliée par une liaison L9 à 128 fils à l'entrée d'un convertisseur parallèle-série P/S qui comporte seize groupes de sorties qui sont respectivement reliées, par des liaisons à huit fils L10, aux entrées de seize convertisseurs parallèle-série p/s dont les sorties sont respectivement reliées aux jonctions de sorties S1 à S16. Le convertisseur P/S joue le rôle inverse du convertisseur S/P, c'est-à-dire qu'il convertit les 128 bits parallèles d'entrée en une série de seize octets, chaque octet étant en parallèle et étant successivement transmis sur les liaisons L10. Les convertisseurs p/s convertissent les octets en série.

Le fonctionnement du commutateur de la Fig. 1 est donc le suivant. Du fait de la vitesse de lecture dans les files supérieure à la vitesse d'écriture, la lecture ne sera initialisée que lorsque la file concernée mémorisera suffisamment d'informations, c'est-à-dire un paquet entier. Le convertisseur S/P fonctionne pour mettre en parallèle le paquet de E1, puis celui de E2 et ainsi de suite, s'ils existent. On a donc sur L2 une succession de seize paquets pendant la durée de transmission d'un paquet sur les jonctions d'entrée. Dans chaque cycle de transmission sur L2, les paquets sont repérés par leur rang e. Par la liaison L4, l'étiquette i du paquet de rang e adresse la mémoire MC qui sur L5 transmet la nouvelle étiquette et sur L8 transmet un nouveau rang s, déterminant le multiplex destinataire, dans le cas d'un multiplex destinataire unique. La file d'attente de rang s parmi les files F1 à F16 enregistre alors l'adresse de la place où est enregistré, dans la mémoire MT, le paquet qui, au même instant, est écrit dans cette mémoire, par L7. A noter que les paquets transmis par la liaison L7 ont déjà leurs nouvelles étiquettes j substituées aux étiquettes i. Pour lire les paquets dans la mémoire MT, l'entrée L du multiplexeur MX1 transmet les adresses qui lui sont transmises successivement par les files F1 à F16 dont les sorties sont explorées cycliquement. Donc, à un instant ts d'un cycle, la file Fs délivre l'adresse du paquet à lire dans la mémoire MT qui le délivre sur la liaison L9. Vu le rang s de ce paquet dans son cycle, le convertisseur P/S le transmet vers la jonction de sortie Ss, par le convertisseur p/s associé.

Il apparaît donc qu'un paquet d'étiquette i entré par la jonction Ee sort avec une étiquette j sur la jonction Ss. On a donc bien réalisé la commutation, étant entendu qu'au cours de l'établissement de la communication paquet, au couple (e, i), l'unité centrale de commande UCC a choisi de faire correspondre le couple (s, j) et l'a enregistré dans la mémoire de commande MC à l'adresse (e, i).

Le schéma de la Fig. 4 permet d'illustrer d'une manière simple le fonctionnement d'un second exemple de réalisation d'une matrice de commutation suivant l'invention.

La matrice de commutation de la Fig. 4 comprend, à la place des convertisseurs S/P et P/S, une matrice de rotation d'entrée MRE et une matrice de rotation de sortie MRS. La matrice MRE à seize entrées à huit fils chacune, respectivement reliées à des liaisons C1 à C16 qui transportent chacune un multiplex de paquets.

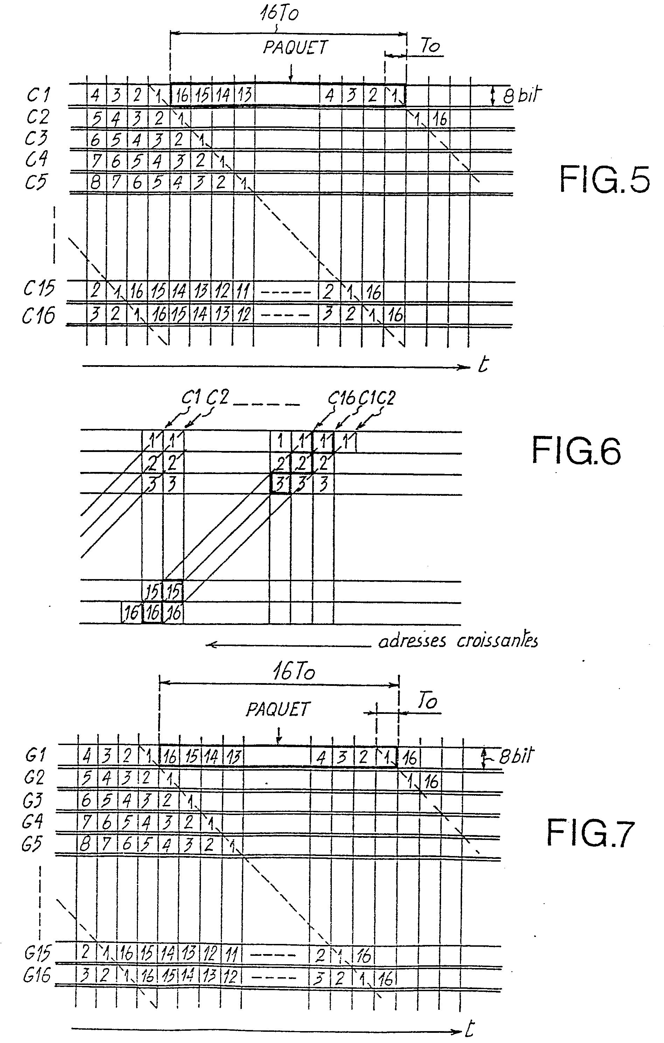

On suppose que les multiplex de C1 à C16 occupent, dans le temps, les positions relatives montrées à la Fig. 5.

A la Fig. 5, chaque paquet est montré limité par un rectangle en trait fort et, dans chaque paquet, les seize octets sont repérés par leurs rangs de 1 à 16. Verticalement, les références C1 à C16 indiquent les multiplex respectivement transportés par les jonctions C1 à C16. Il apparaît que le multiplex de la ligne C2 est en avance d'une période d'octet par rapport au multiplex de la ligne C1 ; de même, le multiplex de la ligne C3 est en avance d'une période d'octet sur celui de la ligne C2, et ainsi de suite. Il apparaît que les octets d'étiquettes « 1 » des paquets des multiplex sont avancés d'une période d'octet en passant d'une ligne à la suivante, c'est-à-dire qu'ils forment visuellement une ligne oblique orientée vers le bas dans le sens de déroulement du temps. Encore, sous une autre forme, si l'on considère, à un instant donné, l'ensemble des jonctions C1 à C16, on a présents, sur la ligne C1, l'octet « 1 », sur la ligne C2, l'octet « 2 », sur la ligne C3, l'octet « 3 », ..., sur la ligne C16, l'octet 16. A l'instant suivant, on a, sur la ligne C1, l'octet « 2 », sur la ligne C2, l'octet « 3 », ..., sur la ligne C16, l'octet « 1 ». Si à cet instant, on décale physiquement l'octet « 1 » de la ligne C16 vers la ligne C1, l'octet « 2 » de la ligne C1 vers la ligne C2, l'octet « 3 » de la ligne C2 vers la ligne C3, ..., l'octet « 16 » de la ligne C15 vers la ligne C16, puis à l'instant suivant, l'octet « 1 » de la ligne C15 vers C1, l'octet « 2 » de la ligne C16 vers C2, l'octet « 3 » de la ligne C1 vers C3, et ainsi de suite, avec un décalage supplémentaire à chaque instant suivant, on obtient la configuration montrée à la Fig. 6. C'est l'opération de décalage physique qu'effectue la matrice de rotation d'entrée MRE de la Fig. 4.

Donc, sur les 16 sorties à huit fils chacune D1 à D16 de la matrice MRE, on trouve les octets rangés comme le montre la Fig. 6. Ainsi, si à l'instant T1, la sortie D1 délivre l'octet « 1 » d'un paquet, l'octet « 2 » de ce paquet sera délivré à l'instant T2 par la sortie D2, l'octet « 3 » de ce paquet sera délivré à l'instant T3 par la sortie D3, etc., jusqu'à la sortie D16. Chaque paquet semble rangé obliquement ou en diagonale sur les sorties D1 à D16.

Il est important de noter que les huit fils de la sortie D1 délivrent successivement les octets « 1 », c'est-à-dire les étiquettes des paquets arrivant sur les lignes C16 à C1. On retrouve donc, en ce qui concerne les étiquettes, une situation physique tout-à-fait analogue à celle de la matrice de commutation de la Fig. 1. Donc, les étiquettes sont délivrées successivement par la sortie D1 et peuvent être traitées dans une mémoire de commande telle que MC afin de leur substituer une nouvelle étiquette.

Dans le schéma de la Fig. 4, la sortie D1 de la matrice de rotation MRE est reliée à l'entrée d'un circuit d'aiguillage et de conversion d'étiquette ACE dont la sortie est reliée par une liaison à huit fils à l'entrée d'une mémoire tampon M1. Par ailleurs, les sorties D2 à D16 de la matrice MRE sont respectivement reliées, par des liaisons à huit fils chacune, aux entrées des mémoires tampons M2 à M16. L'ensemble des mémoires M1 à M16 forme une mémoire tampon de données, dont le rôle est le même que celui de la mémoire MT du circuit de la Fig. 1. Toutefois, les positions des multiplex délivrés par les sorties D1 à D16, comme l'illustre la Fig. 6, font que, dans la mémoire M, les paquets sont rangés suivant la configuration de la Fig. 6.

Bien entendu, le circuit ACE comprend une mémoire de commande capable d'effectuer la conversion d'étiquette.

Les sorties des mémoires M1 à M16 sont respectivement reliées, par des liaisons à huit fils, aux entrées correspondantes F1 à F16 de la matrice de rotation de sortie MRS, qui comporte seize sorties à huit fils G1 à G16, qui sont reliées par des convertisseurs parallèles-séries d'octets aux jonctions de sortie de la matrice de commutation.

Les sorties G1 à G16 sont traitées cycliquement pour lire les paquets stockés dans la mémoire M. Donc, sur les entrées F1 à F16, les positions relatives des paquets ont une configuration analogue à celles qui sont représentées à la Fig. 6. Il apparaît que le paquet destiné à être délivré par la sortie G1 se trouve réparti obliquement temporellement sur les entrées F1 à F16. Ce paquet est suivi du paquet destiné à être délivré par la sortie G2, etc.

Si l'on considère le paquet destiné à la sortie G1, au temps T1, la matrice de rotation de sortie MRS transmet directement l'octet appliqué à F1 vers G1 ; au temps T2, la matrice MRS décale l'octet appliqué à F2 pour le transmettre à G1 ; au temps T3, la matrice MRS décale l'octet appliqué à F3 et le transmet à G1, etc. Les décalages sont effectués dans la matrice de rotation MRS dans le sens inverse de ceux qui sont effectués dans la matrice de rotation MRE.

Bien entendu, au temps T2, l'octet appliqué à l'entrée F1 est décalé et transmis par la sortie G16, etc. Donc, les positions respectives des multiplex sur les sorties G1 à G16 sont les mêmes que celles que l'on avait sur les entrées C1 à C16, Fig. 7.

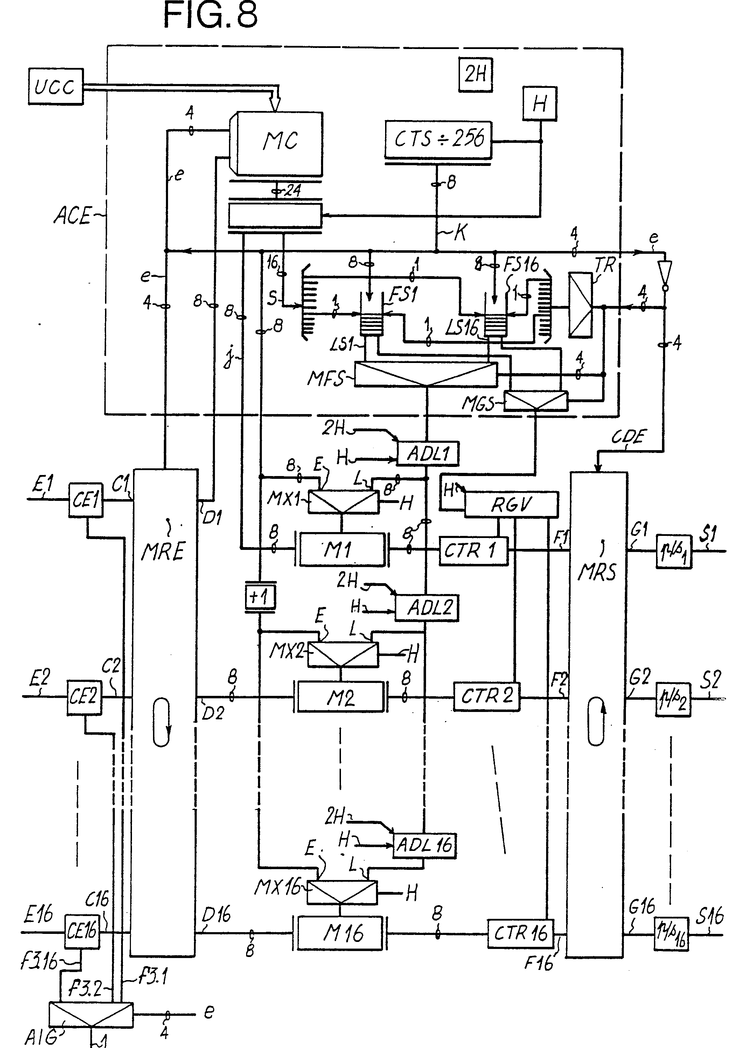

Le bloc-diagramme de la Fig. 8 montre un exemple de réalisation plus détaillé du circuit de la Fig. 4. A la Fig. 8, les jonctions d'entrées E1 à E16 sont reliées, par des circuits d'entrée CE1 à CE16, aux entrées C1 à C16 d'une matrice de rotation d'entrée MRE. La sortie de données D1 de la matrice MRE est reliée par une liaison à huit fils aux huit premières entrées d'adresse d'une mémoire à accès aléatoire MC située dans le circuit d'aiguillage et de conversion d'étiquette ACE. Les sorties D2 à D16 sont reliées aux entrées des mémoires M2 à M16, comme à la Fig. 4.

Un compteur CTS à huit étages de la base de temps BTL comporte une sortie à quatre fils e qui transmettent les quatre bits de poids les plus faibles et qui sont reliés à l'entrée de commande d'un aiguilleur AIG comportant seize sorties f3.1 à f3.16 qui sont respectivement reliées aux entrées f3 des circuits d'entrée CE1 à CE16. La rotation du compteur CTS se traduit par la circulation d'un « 1 » sur les sorties f3.1 à f3.16. Les signaux successifs appliqués aux fils f3.1 à f3.16 en fonction de la sortie du compteur CTS font que les activations en lecture des circuits d'entrée CE1 à CE16 sont séquentielles et, par suite, les paquets prennent les positions indiquées à la Fig. 5.

Quatre secondes entrées d'adresse de la mémoire MC sont reliées à la liaison e. La liaison e est également reliée à l'entrée de commande CDE assurant les décalages dans la matrice de rotation d'entrée MRE.

Le compteur CTS est relié par une liaison à huit fils K, d'une part, à l'entrée E d'un multiplexeur MX1, d'autre part, aux entrées de données de files d'attente d'adresse de sortie FS1 à FS16 et, enfin, à l'entrée d'un additionneur + 1, qui ajoute 1 à l'adresse qui lui est transmise. La sortie de l'additionneur + 1 est reliée, en parallèle, par des liaisons à huit fils, aux entrées E de multiplexeurs MX2 à MX16. A noter que l'additionneur + 1 n'est pas indispensable. Toutefois, il permet de maintenir la configuration oblique des paquets dans les mémoires M1 à M16, en compensant la période d'octet qui est utilisée pour analyser une étiquette dans le circuit ACE.

La sortie de la mémoire MC est reliée par 24 fils à son registre de sortie R dont les huit premières sorties sont reliées par une liaison j à l'entrée de la mémoire tampon M1 et dont les 16 autres sorties sont reliées individuellement aux entrées de commande d'écriture des files FS1 à FS16. L'entrée d'horloge du registre R est reliée à la sortie d'une horloge H de la base de temps BTL.

Les sorties des mémoires M1 à M16 sont reliées à des circuits de transfert CTR1 à CTR16 dont les sorties sont respectivement reliées aux entrées F1 à F16 de la matrice de rotation de sortie MRS.

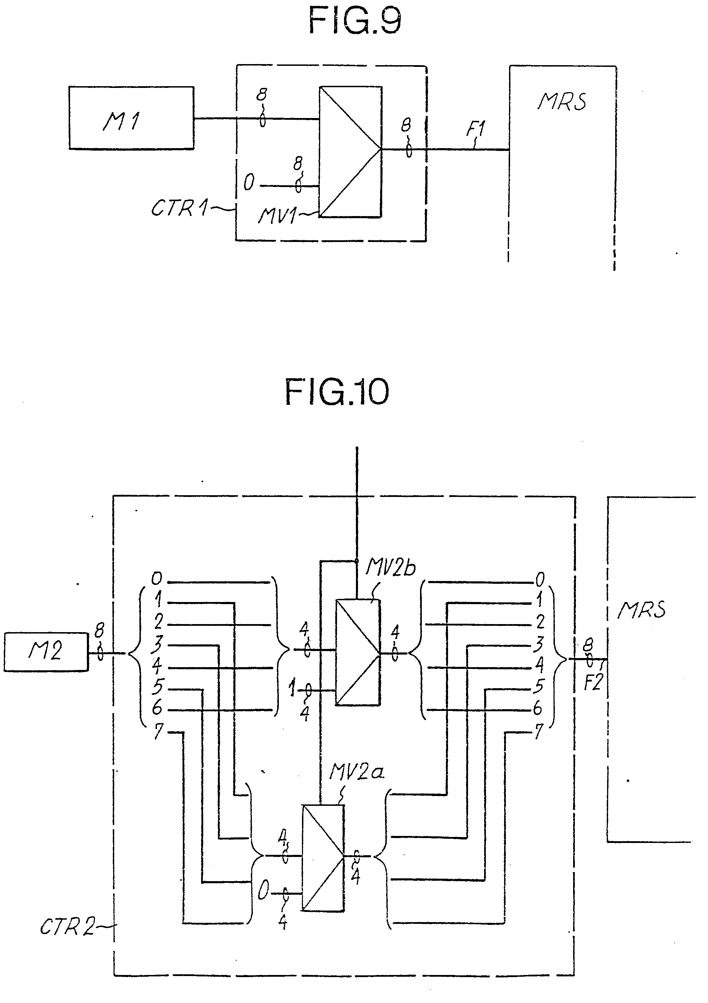

Dans le circuit de transfert CTR1, Fig. 9, la sortie de la mémoire M1 est reliée au premier groupe d'entrées à huit fils d'un multiplexeur MV1 à deux groupes d'entrées, le second groupe d'entrées étant reliées au potentiel correspondant au bit « 0 » et la sortie étant reliée à l'entrée F1.

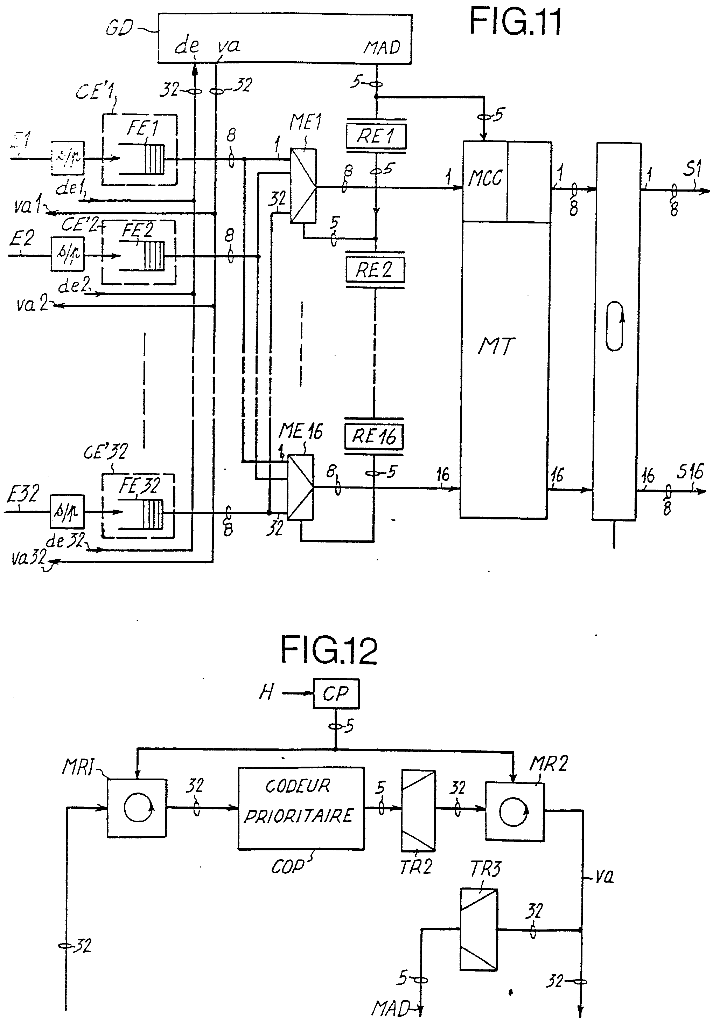

Dans le circuit de transfert CTR2, Fig. 10, les quatre fils de sortie de rang impair, en commençant la numérotation par zéro, de la mémoire M2 sont respectivement reliés aux premières entrées d'un multiplexeur MV2a tandis que les quatre fils de sortie de rangs pairs sont respectivement reliés aux premières entrées d'un multiplexeur MV2b. Les secondes entrées du multiplexeur MV2a sont reliées au potentiel correspondant au bit « 0 », tandis que les secondes entrées de MV2b sont reliées au potentiel de bit « 1 ». Les quatre fils de sortie des multiplexeurs MV2a et MV2b forment respectivement les fils impairs et pairs de la sortie du circuit CTR2 qui est reliée à l'entrée F2 de la matrice de rotation de sortie MRS.

Les circuits de transfert CTR3 à CTR16 ont la même structure que le circuit de transfert CTR2.

Les entrées de commande des circuits CTR1 à CTR16 sont respectivement reliées aux sorties correspondantes d'un registre RGV de seize bits. L'entrée de données du registre RGV est reliée à la sortie d'un multiplexeur MGS et son entrée d'horloge reçoit l'horloge H. Le multiplexeur MGS a seize entrées qui sont reliées au fil de sortie « File vide » des files FS1 à FS16. L'entrée de commande de MGS est reliée à la liaison e.

Les sorties G1 à G16 de la matrice MRS sont respectivement reliées aux jonctions de sortie S1 à S16.

L'entrée de commande de décalage CDE de la matrice MRS reçoit l'information de la liaison e après inversion de chacun des bits. La liaison e est aussi, avec inversion, dérivée, d'une part, vers un démultiplexeur TR et, d'autre part, vers l'entrée de commande d'un multiplexeur MFS. Le démultiplexeur TR a seize sorties individuelles reliées par des fils individuels aux entrées de lecture des files FS1 à FS16. Le démultiplexeur TR effectue le décodage du nombre binaire transmis par e, inversé, en un ordre de lecture délivré sur le fil approprié pour déclencher la lecture d'une adresse dans une des files FS1 à FS16.

Les sorties de données des files FS1 à FS16 sont reliées par seize liaisons LS1 à LS16, à huit fils chacune, aux entrées correspondantes du multiplexeur MFS. La sortie à huit fils du multiplexeur MFS est reliée à l'entrée d'un compteur-registre ADL1. La sortie à huit fils du compteur-registre ADL1 est reliée, d'une part, à l'entrée L du multiplexeur MX1 et, d'autre part, à l'entrée d'un compteur-registre ADL2. La sortie à huit fils du compteur-registre ADL2 est reliée, d'une part, à l'entrée L du multiplexeur MX2 et, d'autre part, à l'entrée d'un compteur-registre suivant ADL3, et ainsi de suite jusqu'au compteur-registre ADL16.

Les compteurs-registres ADL1 à ADL16 ont chacun leur entrée de sélection de fonction comptage ou chargement reliée à l'horloge H et leur entrée d'activation de la fonction sélectionnée reliée à une horloge 2H.

Les sorties à huit fils des multiplexeurs MX1 à MX16 sont respectivement reliées aux entrées d'adresse des mémoires M1 à M16. Les entrées de commande écriture-lecture E/L des multiplexeurs MX1 à MX16 sont reliées à la sortie de l'horloge H, permettant de choisir entre le groupe associé à l'entrée E, porteur des adresses d'écriture, et le groupe associé à l'entrée L, porteur des adresses de lecture.

On va maintenant décrire le fonctionnement de la matrice de commutation de la Fig. 8. On a déjà décrit le rôle des circuits d'entrée CE1 à CE16 en relation avec la matrice de commutation de la Fig. 1. La matrice de rotation d'entrée MRE peut être constituée par des circuits connus en terminologie anglo-saxonne sous les noms de « Rotate matrix » ou « Shift matrix » commercialisées en technologie ECL 100K sous le N° 100158. Une fois décalée, la sortie D1 transmet l'étiquette i à la mémoire MC qui reçoit également le rang de la jonction d'entrée. La mémoire MC, adressée par e et i, délivre la nouvelle étiquette j et l'identification de la ou des jonctions de sortie S adéquates. Au même instant, le compteur CTS délivre un nombre parmi $2^8$, qui représente l'adresse Adi à laquelle l'étiquette j doit être écrite dans la mémoire M1. Egalement, au même instant, cette adresse Adi est introduite dans la file FS1 à FS16 qui est désignée par la valeur s de la sortie du registre R de la mémoire MC. Encore, au même instant, l'étiquette j est écrite. Le rôle de l'additionneur + 1 a déjà été décrit. Il en résulte que les octets 2 à 15 du paquet de nouvelle étiquette j vont être successivement écrits dans les mémoires correspondantes M2 à M16, la configuration oblique de la Fig. 6 étant respectée.

Il faut noter que les mémoires M1 à M16 sont prévues pour enregistrer $16 \times 16$ paquets, ce qui explique leur adressage sur huit fils.

Par l'intermédiaire de la liaison e, inversée, et du démultiplexeur TR, la base de temps explore cycliquement les seize files FS1 à FS16. L'information sur la liaison e, inversée, sert également à sélecter l'entrée du multiplexeur MFS qui est reliée à la file d'attente sélectée par le démultiplexeur TR. Les inverseurs INV, situés en amont de l'entrée CDE de la matrice de rotation de sortie MRS, ainsi qu'en amont de TR et MFS, ont pour but d'assurer un fonctionnement de cette matrice en sens inverse de la matrice d'entrée MRE, l'inversion des adresses étant alors également nécessaire pour TR et MFS. Pendant la première moitié du temps octet, l'adresse Adi de l'étiquette d'un paquet est transmise au compteur-registre ADL1 dont la sortie adresse, par MX1, la mémoire M1 en lecture. Pendant la seconde moitié du temps octet, le contenu du registre ADL1 est incrémenté de 1. Pendant cette même moitié de temps octet, la mémoire M1 est, à travers MX1, adressée en écriture. Au temps octet suivant, le compteur-registre ADL1 transmet son contenu au compteur-registre ADL2 et reçoit de MFS une nouvelle adresse trouvée dans la file d'attente suivante. Donc, à cet instant, le contenu du registre ADL2 est capable, pendant la première moitié du temps octet, d'adresser la mémoire M2 en lecture, à travers MX2, c'est-à-dire de lire le second octet du paquet. Pendant la seconde moitié du temps octet, le compteur-registre ADL2 est incrémenté de 1, ce qui va permettre par ADL3 de lire l'octet 3 au temps suivant, etc. Il apparaît donc que les octets d'un paquet sont lus en succession dans les mémoires M1 à M16 où ils occupent des adresses variant de Adi à Ad(i + 15). Par ailleurs, l'information de commande de la matrice de rotation de sortie MRS variant à chaque temps d'octet, les octets d'un paquet sont successivement délivrés sur la même sortie Gs. Le convertisseur associé p/s remet ensuite les octets en série et on retrouve sur la jonction de sortie désirée le paquet entrant, avec son étiquette modifiée.

On notera que l'horloge 2H permet de faire deux opérations en un temps d'octet.

La mémoire MC de commande est une mémoire à accès aléatoire RAM 4K × 24 programmée par l'extérieur par l'unité de commande UCC. Comme on l'a vu, elle affecte à chaque voie logique d'un multiplex entrant une nouvelle étiquette correspondant au multiplex sortant ou aux multiplex sortants dont la ou les files FSi seront parallèlement activées en écriture en fonction de l'état des 16 fils de sortie de la mémoire de commande. L'adresse du premier octet du paquet en cause, pointé par CTS, est rangée dans la ou les files Fi activées. Il apparaît ainsi que la matrice de commutation de l'invention peut, non seulement transmettre point à point des paquets, mais encore permet de les diffuser.

Lorsqu'elles sont vides, les files FS1 à FS16 présentent en sortie de données la valeur 0. Cela signifie qu'aucun paquet ne devra être envoyé sur le multiplex correspondant ou, ce qui revient au même, que le paquet transmis devra avoir une étiquette nulle, si l'on désire, comme on l'a mentionné dans le préambule, utiliser le mode de synchronisation de la demande de brevet 82 18123. Quand le fil de sortie « file vide » d'une file FSi, validée par le démultiplexeur TR, est à « 1 », indiquant que la file est vide, le signal « 1 » apparaît à la sortie du multiplexeur MGS, si bien que le premier fil de sortie du registre RGV est à 1, orientant le multiplexeur MV1 de CTR1 vers le potentiel de bit « 0 ». Ainsi, MV1 délivre un octet nul à l'entrée F1. Au temps suivant de l'horloge H, le bit « 1 » de RGV a progressé d'un pas et oriente MV2a et MV2b, dans CTR2, respectivement vers les potentiels de bits « 1 » et « 0 ». MV2a et MV2b délivrent donc, à eux deux, un octet de « 1 » et de « 0 » alternés à l'entrée F2, et ainsi de suite aux temps d'horloge suivants jusqu'au circuit de transfert CTR16 comprenant MV16a et MV16b. Ainsi se trouve constitué un paquet à étiquette nulle, suivie d'une alternance de « 1 » et de « 0 ».

La Fig. 11 montre le schéma d'un concentrateur de paquets fonctionnant sensiblement comme une matrice de commutation de la Fig. 8.

Avant de décrire en détail le concentrateur de la Fig. 11, il faut remarquer que l'on peut réaliser, directement à partir d'une matrice de la Fig. 8, un concentrateur en réduisant en sortie le nombre des jonctions, c'est-à-dire des multiplex. Toutefois, il semble préférable de rechercher à augmenter le nombre des jonctions d'entrée en gardant le nombre des jonctions de sortie constant. Cette solution est mise en œuvre dans le concentrateur de la Fig. 11.

Le concentrateur, Fig. 11, comprend 32 jonctions d'entrées E1 à E32, sur lesquelles sont montés des circuits d'entrée CE'1 à CE'32, semblables aux circuits CE1 à CE16, Fig. 1. Pour chaque circuit CE'1 à CE'32, la sortie de détection de présence d'information dans sa file est reliée à un fil de demande de service de, qui est à « 1 » dès que la file contient de l'information. De plus, le fil f3 est relié à un fil de commande de lecture va qui est activé pour commander la lecture de la file. Les 32 fils de et les 32 fils va sont reliés à un circuit de gestion des demandes GD, dont un exemple de réalisation est montré en détail à la Fig. 12.

A la Fig. 12, les 32 fils de sont respectivement reliés aux entrées correspondantes d'une matrice de rotation MR1 dont l'entrée de commande est reliée, par une liaison à cinq fils, à un compteur CP piloté par l'horloge H de la base de temps et dont la sortie à 32 fils est reliée à l'entrée d'un codeur prioritaire COP. Le codeur a une sortie à cinq fils reliée à l'entrée d'un décodeur TR2 qui comporte 32 fils de sortie qui sont reliés aux entrées d'une matrice de rotation MR2 dont l'entrée de commande est également reliée au compteur CP et dont les 32 fils de sortie constituent les fils va. En dérivation, sur les fils va, se trouve un codeur TR3 qui traduit l'information présente sur un de ses fils d'entrée en un mot de cinq bits délivré à sa sortie MAD.

A la Fig. 11, la sortie MAD est reliée, d'une part, à l'entrée d'un registre RE1 et, d'autre part, à l'entrée correspondante d'une mémoire de commande MCC. La sortie du registre RE1 est, d'une part, reliée à l'entrée de commande d'un multiplexeur ME1 et, d'autre part, à l'entrée d'un registre RE2. La sortie du registre RE2 est, d'une part, reliée à l'entrée de commande d'un multiplexeur ME2 et, d'autre part, à l'entrée d'un registre RE3, et ainsi de suite jusqu'à un registre RE16 associé à un multiplexeur ME16.

Chaque multiplexeur ME1 à ME16 comporte 32 entrées à huit fils respectivement reliées aux sorties des 32 files FE1 à FE32. Les sorties des multiplexeurs ME1 à ME16 sont l'équivalent des sorties D1 à D16 de la Fig. 8. Les seize sorties à huit fils de la mémoire tampon MT sont reliées aux entrées correspondantes d'une matrice de rotation de sortie MRS.

Le fonctionnement du concentrateur des Figs. 11 et 12 est le suivant. Les circuits d'entrée CE'1 à CE'32, dont les files contiennent de l'information, activent leurs fils de. La matrice de rotation MR1, sous la commande du compteur cyclique CP, décale les demandes appliquées à ses entrées. Le codeur prioritaire COP, qui peut être réalisé avec des circuits commercialisés sous la référence ECL100K 100165, choisit parmi ses entrées marquées, celle qui a la priorité la plus haute et délivre son code à sa sortie. Le décodeur TR2 active le fil parmi ses 32 fils de sortie qui correspond au code délivré par COP. La matrice de rotation MR2 qui est commandée en synchronisme avec la matrice MR1 décale au sens inverse l'ordre de son entrée activée afin de commander par son fil va la file dont la demande a été choisie par le circuit COP. Cela revient à choisir un fil parmi 32 avec une priorité tournante.

Par ailleurs, le codeur TR3 délivre un mot de code à cinq bits correspondant au fil de sortie activée de MR2. Le mot de sortie de TR3 est appliqué au registre RE1 dont la sortie sélecte dans le multiplexeur ME1 l'entrée correspondant à la file FEi du circuit CE'i qui a été choisie par COP. Donc, l'étiquette du premier paquet contenu dans cette file FEi est transmise par ME1 à la mémoire MCC. Dans la mémoire MCC, l'étiquette est modifiée, comme on l'a vu en relation avec la matrice de la Fig. 8.

Au temps de code suivant, le registre RE2 est chargé par le contenu de RE1, qui est aussi chargé à nouveau. Donc, à ce temps d'octet, le contenu de RE2 sélecte l'entrée du multiplexeur ME2 qui correspond à la file FEi, laquelle transmet son second octet qui est transmis dans la mémoire M2 et MT. Ce processus se poursuit jusqu'au multiplexeur ME16.

A ce moment, la mémoire MT contient à des adresses décalées le paquet dont la configuration dans MT est identique à celle de la Fig. 6. En sortie, la matrice MRS rétablit la structure normale, c'est-à-dire que le paquet est transmis sur une seule jonction de sortie, comme on l'a décrit en relation avec la Fig. 8.

D'après ce qui précède, il apparaît que, sauf en ce qui concerne les décalages dans le temps et les permutations, le concentrateur de la Fig. 11 se présente sous une forme très semblable à celle d'une matrice de commutation. L'adressage de la mémoire de commande MCC est obtenu à partir de l'étiquette de paquet et du mot de cinq bits fourni par le codeur TR3, ce mot fournissant l'adresse géographique du multiplex d'entrée. L'adressage de sortie est effectué de la même façon que dans la matrice de la Fig. 8.

En groupant des matrices de commutation sans blocage de capacité 16 × 16, il est possible d'obtenir des structures sans blocage de taille plus importante. Comme en commutation temporelle de circuit, il est également possible de réaliser des systèmes de commutation à structures de type « T étendu ».

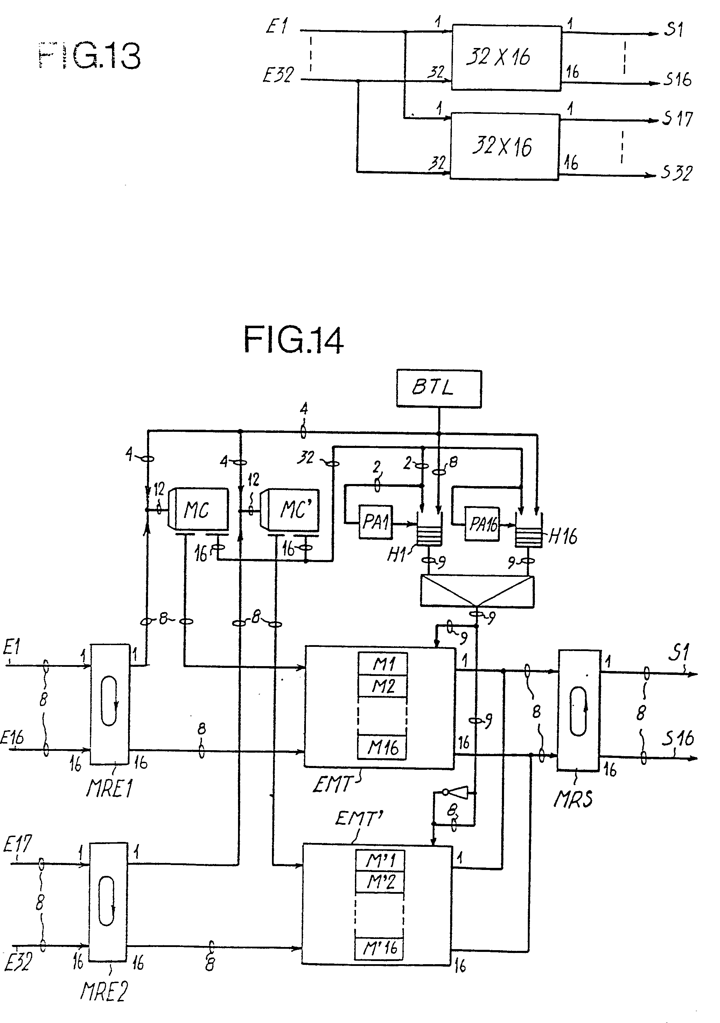

Suivant l'invention, le bloc-diagramme de la Fig. 13 montre comment on obtient une matrice 32 × 32 à partir de la mise en parallèle de deux modules identiques de capacité 32 × 16. Les modules 32 × 16 ont une structure qui est montrée à la Fig. 14.

L'étage de commutation de la Fig. 14 comporte deux ensembles d'entrées E1 à E16 et E17 à E32. Les entrées E1 à E16 sont reliées, par des convertisseurs d'octets s/p et des circuits d'entrée, non montrés, aux entrées d'une matrice de rotation d'entrée MRE1. Les entrées E17 à E32 sont, de même, reliées aux entrées d'une matrice de rotation d'entrée MRE2. Bien entendu, les matrices MRE1 et MRE2 fonctionnent comme la matrice MRE de la Fig. 8.

Les sorties D1 et D'1 des matrices MRE1 et MRE2 sont respectivement reliées par des liaisons à huit fils aux entrées correspondantes de deux mémoires MC et MC'. Les quatre autres entrées d'adressage de ces deux mémoires MC et MC' sont reliées, en parallèle, à la sortie d'une base de temps BTL. Les huit premières sorties de données des mémoires MC et MC' sont respectivement reliées aux entrées des mémoires tampon M1 et M'1 qui font partie chacune de deux ensembles de mémoires tampons EMT et EMT'. Comme la mémoire MT, Fig. 8, la mémoire EMT comprend seize mémoires tampons M1 à M16, tandis que la mémoire EMT' comprend, d'une manière analogue, seize mémoires tampons M'1 à M'16.

Les sorties D2 à D16 de MRE1 sont respectivement reliées aux entrées de données des mémoires M2 à M16 tandis que les sorties D'2 à D'16 de MRE2 sont respectivement reliées aux entrées de données des mémoires tampons M'2 à M'16. Les sorties des mémoires tampons M1 et M'1 sont reliées, en parallèle par réalisation d'un OU câblé, à l'entrée F1 d'une matrice de rotation de sortie MRS ; de même les sorties des mémoires tampons Mi et M'i sont reliées, en parallèle, à l'entrée Fi de la matrice MRS. Les sorties G1 à G16 de MRS sont reliées aux sorties S1 à S16 de l'étage, par des convertisseurs, non montrés.

La lecture des mémoires EMT et EMT' est effectuée à partir de files d'attente H1 à H16 qui sont semblables aux files FS1 à FS16 de la matrice de la Fig. 8. Les entrées dé commande d'écriture des files H1 à H16 sont respectivement reliées aux sorties de circuits PA1 à PA16. Chaque circuit PA1 à PA16 a deux entrées qui sont respectivement reliées aux fils de sortie de même rang dans les seize dernières sorties de chacune des mémoires MC et MC'.

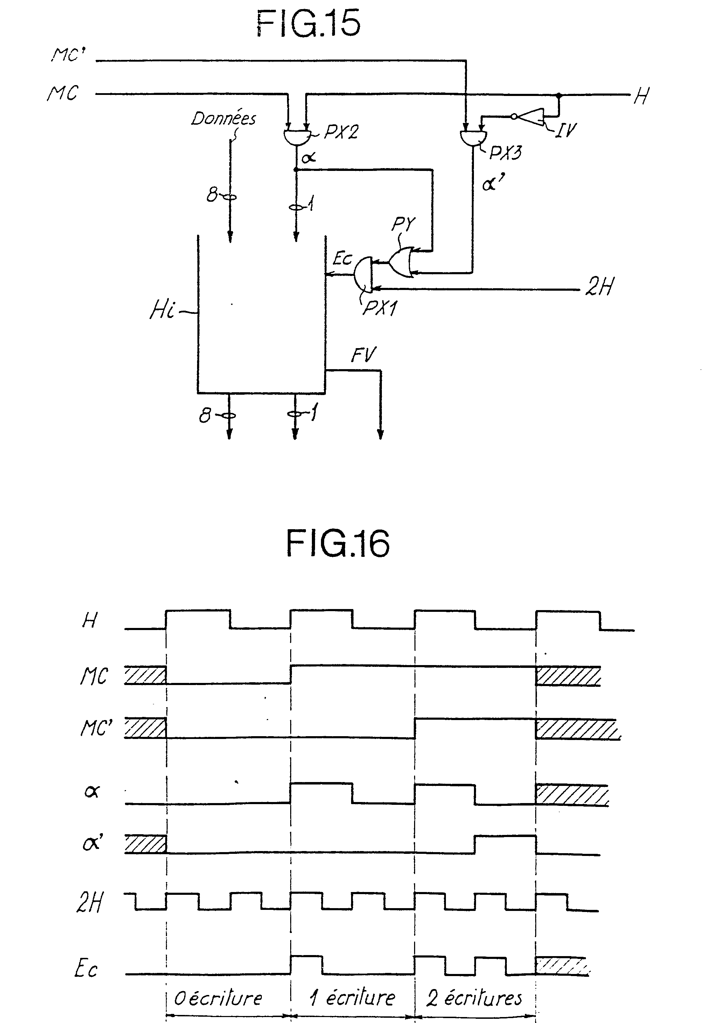

La Fig. 15 montre en détail un circuit PAi associé à une file Hi. Chaque file Hi a son entrée d'écriture Ec reliée à la sortie d'une porte ET PX1 dont une première entrée est reliée à la sortie d'horloge 2H de la base de temps BTL et dont la seconde entrée est reliée à la sortie d'une porte OU PY. La porte OU PY a ses deux entrées respectivement reliées aux sorties de deux portes ET PX2 et PX3. La porte ET PX2 a une entrée reliée au $i^{ème}$ fil de sortie de la mémoire MC et son autre entrée reliée à la sortie d'horloge H de la base de temps BTL. La porte ET PX3 a une entrée reliée à la $i^{ème}$ sortie de la mémoire MC' et son autre entrée reliée, par un inverseur IV, à la sortie d'horloge H de la base de temps BTL.

Le fonctionnement du système des Figs. 14 et 15 est le suivant. Chaque ensemble MRE1, MC, EMT ou MRE2, MC' et EMT4 fonctionne de la même manière que l'ensemble MRE, MC, MT de la Fig. 8. Il y a une différence en ce qui concerne les organes de lecture des mémoires tampons. Etant donné qu'un paquet destiné à une sortie peut provenir simultanément de deux multiplex entrants provenant respectivement des deux blocs d'entrée, il faut prévoir la possibilité d'effectuer les deux écritures d'adresse dans la ou les files Hi concernées. On obtient ce résultat à l'aide du circuit de la Fig. 15.

Au cours d'un cycle d'horloge H, Fig. 16, une moitié du temps est affecté à l'exploration de demandes d'écriture provenant de la mémoire MC, tandis que l'autre moitié est affectée aux demandes d'écriture de la mémoire MC'. Les deux signaux significatifs sont successivement acheminés sur l'entrée correspondante de la porte PX1 où ils sont échantillonnés au rythme double de l'horloge 2H. Les signaux échantillonnés permettent alors l'écriture. Le signal Ec du diagramme de la Fig. 16, illustre un cas où l'on a, au cours de trois périodes successives de H, aucune, une et deux écritures respectivement.

D'autre part, le signal délivré par la porte PX2 est chargé dans la file Hi où il constitue un $9^e$ bit indiquant si le paquet dont on va charger l'adresse dans Hi, est à rechercher dans la mémoire tampon EMT ou EMT'. Ce $9^e$ bit servira à valider, en sortie, l'une des deux mémoires tampons.

Bien que dans la description qui précède, on a représenté des paquets de n = 16 octets correspondant au nombre de multiplex entrants ou sortants, on doit comprendre que le système de l'invention permet de traiter, d'une manière générale, un nombre multiple entier k de n octets. Ceci implique, dans les circuits des Figs. 1 et 8, que la substitution d'étiquette et la commande d'aiguillage ne s'effectuent qu'une fois sur k, cycliquement.

## Revendications

1. Système de commutation de paquets série à nombre de mots fixe provenant d'une pluralité (n) de jonctions entrantes ($E_1$, $E_2$, ..., $E_n$) transmettant des multiplex à intervalles de temps contenant chacun un paquet vers une pluralité (n) de jonctions sortantes ($S_1$, $S_2$, ..., $S_n$) transmettant des multiplex à intervalles de temps contenant chacun un paquet, chaque paquet série entrant ou sortant comportant un en-tête de routage formé d'un mot, le système de commutation comprenant une base de temps (CTS), une mémoire tampon ($M_1$, ..., $M_n$), une mémoire de commande programmable à accès aléatoire (MC), des moyens (D1, e) pour transmettre aux entrées d'adresse de la mémoire de commande (MC) l'en-tête et l'identification de la jonction entrante d'origine de chaque paquet entrant, une sortie (j) de données de ladite mémoire de commande (MC) délivrant un nouvel en-tête traduit à substituer à l'en-tête d'origine de manière à former, avec le reste du paquet entrant correspondant, un paquet sortant, la mémoire tampon ($M_1$, ..., $M_n$) étant activée cycliquement en écriture par un compteur cyclique (CTS) pour mémoriser les paquets sortants, une pluralité (n) de moyens de mémorisation (FS1 à FS16) commandés par la mémoire de commande (MC) pour mémoriser les adresses des paquets sortants qui sont présents dans la mémoire tampon ($M_1$, ..., $M_n$), chaque moyen de mémorisation (FS1 à FS16) correspondant à une jonction sortante (S1 à S16), des moyens de lecture (TR) sensibles à un signal d'activation d'une quelconque des jonctions sortantes (S1 à Sn) pour lire l'adresse contenue dans le moyen de mémorisation correspondant (FS1 à FS16) de manière à lire, dans la mémoire tampon, le paquet sortant destiné à ladite jonction sortante, caractérisé en ce qu'il comprend encore des premiers moyens de conversion (MRE) à n premières entrées (C1 à C16) et n premières sorties (D1 à D16) transformant chaque paquet série entrant par une des premières entrées en un paquet diagonal entrant dont les mots sont respectivement délivrés sur les n premières sorties tout en conservant leur ordre temporel initial, de telle sorte qu'une première sortie prédéterminée (D1) délivre l'en-tête de paquet, en ce que la mémoire tampon est divisée en n mémoires élémentaires ($M_1$, ..., $M_n$), en ce que les sorties de données des moyens de mémorisation (FS1, ..., FS16) accèdent sélectivement à l'entrée d'une chaîne de n compteurs-registres (ADL1, ..., ADL16), montés en série, les n compteurs-registres adressant respectivement en lecture les n mémoires élémentaires ($M_1$, ..., $M_n$), lesdits compteurs-registres (ADL1, ..., ADLn) faisant progresser l'information d'adresse dans la chaîne et incrémentant cette information, permettant ainsi la lecture du paquet diagonal sortant, et en ce qu'il comprend encore des seconds moyens de conversion (MRS) à n secondes entrées (F1 à F16) et n secondes sorties (G1 à G16) transformant chaque paquet diagonal sortant dont les mots sont respectivement appliqués aux n secondes entrées en un paquet série sortant délivré par la seconde sortie affectée à la jonction sortante (S1 à Sn) activée.

2. Système de commutation selon la revendication 1, caractérisé en ce que les moyens de mémorisation (FS1 à FS16) sont validés sélectivement en écriture en fonction d'une information déduite de l'entête du paquet entrant et délivrée par la mémoire de commande (M1, ..., M16).

3. Système de commutation selon la revendication 1 ou 2, caractérisé en ce que les premiers moyens de conversion comprennent encore des moyens de décalage (CE1 à CE16, AIG) dans le temps des multiplex entrants pour que les entêtes des paquets entrants provenant des différentes jonctions entrantes ne se présentent pas simultanément, ces en-têtes étant ainsi délivrés séquentiellement sur ladite première sortie prédéterminée (D1) des premiers moyens de conversion (MRE).

4. Système de commutation selon l'une quelconque des revendications 1 à 3, caractérisé en ce que les premiers moyens de conversion (MRE) et les seconds moyens de conversion (MRS) sont chacun constitués par une matrice de rotation à n pas de rotation, n sorties, n entrées.

5. Système de commutation selon la revendication 3 ou 4, caractérisé en ce que les moyens de décalage dans le temps comportent, par jonction entrante (E1 à E16), une file tampon (CE1 à CE16) du type premier entré-premier sorti (FIFO) qui reçoit en entrée les mots appliqués par une jonction entrante, et un circuit logique de commande écriture-lecture de ladite file, tampon, tel que la file lorsqu'elle n'est pas vide, fournisse en sortie un paquet synchronisé sur une référence externe (AIG).

6. Système de commutation selon l'une quelconque des revendications 1 à 5, caractérisé en ce que les mots des paquets se présentent sous forme d'octets qui sont mis en parallèle en amont des premiers moyens de conversion (MRE) et mis en série en aval des seconds moyens de conversion (MRS).

7. Système de commutation selon la revendication 4, caractérisé en ce que chaque paquet comprend n octets ou un multiple entier de n octets.

8. Système de commutation selon la revendication 1, caractérisé en ce qu'il comporte n jonctions d'entrée supplémentaires, les premiers moyens de conversion comportant un circuit sensible à la présence d'information sur les jonctions d'entrée pour sélecter l'une de ces jonctions selon un critère prédéterminé, des moyens pour convertir le paquet de la jonction sélectée sous la forme de n mots se présentant en parallèle.

**Claims**

1. A switching system for switching series data packets formed of a fixed number of words incoming from a plurality (n) of ingoing junctions ($E_1$, $E_2$, ..., $E_n$) transmitting multiplex which are made of time intervals each containing one data packet towards a plurality (n) of outgoing junctions ($S_1$, $S_2$, ..., $S_n$) transmitting multiplex made of time intervals each containing one data packet, each incoming or outgoing series data packet having a routing header formed by a word, the switching system comprising a time base (CTS), a buffer memory ($M_1$, ..., $M_n$), a programmable control RAM memory (MC), means (D1, e) for transmitting to the adress inputs of the control memory (MC) the header and the identity of the ingoing junction originating the concerned incoming data packet, a data output (j) of said control memory (MC) delivering a new translated header in replacement of the initial header in order to form an outgoing data packet together with the remaining part of the corresponding incoming data packet, the buffer memory ($M_1$, ..., $M_n$) being cyclically enabled for writing operation by means of a cyclic counter (CTS) for storing the outgoing data packets, a plurality (n) of storing means (FS1-FS16) controlled by the control memory (MC) for storing the addresses of the outgoing data packets which are stored in the buffer memory ($M_1$, ..., $M_n$), each storing means (FS1-FS16) corresponding to an outgoing junction (S1-S16), reading means (TR) responsive to an enable signal of any of the outgoing junctions (S1-Sn) for reading the address stored in the corresponding storing means (FS1-FS16) in order to read out of the buffer memory the outgoing data packet assigned to said output junction, characterized in that it further comprises first conversion means (MRE) having n first inputs (C1-C16) and n first outputs (D1-D16) for converting each incoming series data packet from any of the first inputs into an incoming diagonal data packet whose words are respectively delivered from the n first outputs while keeping their original time order, so that a predetermined first output (D1) delivers the data packet header, in that the buffer memory is comprised of n individual memories ($M_1$, ..., $M_n$), in that the data outputs of storing means (FS1, ..., FS16) have selective access to the input of a chain of n serially mounted counter-registers (ADL1, ..., ADL16), the n counter-registers addressing respectively for reading operation the n individual memories ($M_1$, ..., $M_n$), said counter-

registers (ADL1, ..., ADLn) causing the address information to progress through the chain and incrementing this information, so allowing readout of the outgoing diagonal data packet, and in that it further comprises second conversion means (MRS) having n second inputs (F1-F16) and n second outputs (G1-G16) converting each outgoing diagonal data packet whose words are respectively applied to the n second inputs in an outgoing series data packet delivered from the second output assigned to the enabled output junction (S1-Sn).

2. A switching system according to claim 1, characterized in that the storing means (FS1-FS16) are selectively enabled in writing operation in response to an information derived from the incoming data packet header and delivered from the control memory (M1, ..., M16).

3. A switching system according to claim 1 or 2, characterized in that the first conversion means further comprise shifting means (CE1-CE16, AIG) for timely shifting incoming multiplexes whereby the headers of incoming data packets originating from various ingoing junctions are not simultaneously applied, these headers being so sequentially delivered from said first predetermined output (D1) of the first conversion means (MRE).

4. A switching system according to anyone of claims 1-3, characterized in that the first conversion means (MRE) and second conversion means (MRS) are each constituted by a n-rotational step matrix with n outputs and n inputs.

5. A switching system according to claim 3 or 4, characterized in that the time shifting means have, for each incoming junction (E1-E16), a buffer FiFo queue (CE1-CE16) which receives the words applied from an ingoing junction, and a logic circuit for controlling writing and reading operations in said buffer FiFo queue, so that the queue when not empty supplies a data packet in synchronism with an external reference (AIG).

6. A switching system according to anyone of claims 1-5, characterized in that the words of the data packets are in the form of bytes which are parallel delivered upstream the first conversion means (MRE) and series converted downstream the second conversion means (MRS).

7. A switching system according to claim 4, characterized in that each data packet comprises n bytes or a multiple integer of n bytes.

8. A switching system according to claim 1, characterized in that it comprises n additional ingoing junctions, the first conversion means having a circuit responsive to the presence of an information of the ingoing junctions in order to select one of these junctions according to a predetermined criterion, means for converting the data packet from the selected junction in the form of n words being delivered in parallel.

## Patentansprüche

1. Schaltsystem zum Schalten von aus einer festen Anzahl von Worten gebildeten Serien-Paketen, die von einer Vielzahl (n) von Eingangs-Schnittstellen ($E_1$, $E_2$, ..., $E_n$) ausgehen, die Multiplexe in Zeitintervallen übertragen, von denen jedes ein Paket enthält, in Richtung auf eine Vielzahl (n) von Ausgangs-Schnittstellen ($S_1$, $S_2$, ..., $S_n$), die Multiplexe in Zeitintervallen übertragen, von denen jedes ein Paket enthält, wobei jedes ankommende oder ausgehende Serien-Paket einen durch ein Wort gebildeten Leitkopf enthält, wobei das Schaltsystem eine Zeitbasis (CTS) umfaßt, einen Pufferspeicher ($M_1$, ..., $M_n$), einen programmierbaren Steuer-RAM-Speicher (MC), Mittel (D1, e), um zu den Adressen-Eingängen des Steuerspeichers (MC) den Kopf und die Identität der Eingangs-Schnittstelle, von der das betroffene ankommende Paket stammt, zu übertragen, wobei ein Daten-Ausgang (j) des genannten Steuerspeichers (MC) einen neuen übersetzten Kopf als Ersatz des ursprünglichen Kopfes liefert, um zusammen mit dem restlichen Teil des entsprechenden ankommenden Pakets ein ausgehendes Paket zu bilden, wobei der Pufferspeicher ($M_1$, ..., $M_n$) zyklisch für Schreibbetrieb durch einen zyklischen Zähler (CTS) aktiviert wird, um die ausgehenden Pakete zu speichern, wobei eine Vielzahl (n) von Speichermitteln (FS1 bis FS16) vorhanden ist, die von dem Steuerspeicher (MC) gesteuert wird, um die Adressen der ausgehenden Pakete zu speichern, die in dem Pufferspeicher ($M_1$, ..., $M_n$) gespeichert sind, wobei jedes Speichermittel (FS1 bis FS16) einer Ausgangs-Schnittstelle (S1 bis Sn) entspricht, wobei Lesemittel (TR) vorhanden sind, die auf ein Aktivierungs-Signal irgendeiner Ausgangs-Schnittstelle (S1 bis Sn) ansprechen, um die in den entsprechenden Speichermitteln (FS1 bis FS16) gespeicherte Adresse zu lesen, um so aus dem Pufferspeicher das ausgehende Paket auszulesen, das für die genannte Ausgangs-Schnittstelle bestimmt ist, dadurch gekennzeichnet, daß es ferner erste Umsetzer-Mittel (MRE) mit n ersten Eingängen (C1 bis C16) und n ersten Ausgängen (D1 bis D16) enthält, um jedes von einem der ersten Eingänge ankommende Serien-Paket in ein ankommendes Diagonal-Paket umzusetzen, dessen Worte jeweils unter Aufrechterhaltung ihrer ursprünglichen zeitlichen Reihenfolge an die n ersten Eingänge geliefert werden, so daß ein erster vorbestimmter Ausgang (D1) den Paket-Kopf liefert, daß der Pufferspeicher in n Elementar-Speicher ($M_1$, ..., $M_n$), unterteilt ist, daß die Daten-Ausgänge der Speichermittel (FS1, ..., FS16) wahlweisen Zugriff zu dem Eingang einer Kette von n in Serie geschalteten Zähler-Registern (ADL1, ..., ADL16) haben, wobei die n Zähler-Register jeweils die n Elementar-Speicher ($M_1$, ..., $M_n$) zum Lesebetrieb adressieren, wobei die genannten Zähler-Register (ADL1, ..., ADLn) bewirken, daß die Adressen-Information durch die Kette fortschreitet und diese Information inkrementiert wird, so daß ein Auslesen des ausgehenden Diagonal-Pakets erlaubt wird, und daß es noch zweite Umsetzer-Mittel (MRS) mit n zweiten Eingängen (F1 bis F16) und n zweiten Ausgängen (G1 bis G16) aufweist, die jedes ausgehende Diagonal-Paket, dessen Worte jeweils den n zweiten Eingängen zugeführt werden, in ein ausgehendes Serien-Paket umsetzen, das von dem zweiten Ausgang geliefert wird, der der aktivierten Ausgangs-Schnittstelle (S1 bis Sn) zugeordnet ist.

2. Schaltsystem nach Anspruch 1, dadurch gekennzeichnet, daß die Speichermittel (FS1 bis FS16) wahlweise für Schreibbetrieb in Abhängigkeit von einer Information wirksam gemacht werden, die von dem Kopf des ankommenden Pakets abgeleitet und von dem Steuerspeicher (M1, ..., M16) geliefert wird.

3. Schaltsystem nach Anspruch 1 oder 2, dadurch gekennzeichnet, daß die ersten Umsetzer-Mittel ferner Schiebemittel (CE1 bis CE16, AIG) enthalten, um ankommende Multiplexe zeitlich zu verschieben, wobei die Köpfe von eingehenden Paketen, die von unterschiedlichen Eingangs-Schnittstellen ausgehen, nicht gleichzeitig verfügbar sind, und diese Köpfe auf diese Weise der Reihe nach von dem genannten ersten vorgegebenen Ausgang (D1) der ersten Umsetzer-Mittel (MRE) gespeist werden.

4. Schaltsystem nach einem der Ansprüche 1 bis 3, dadurch gekennzeichnet, daß die ersten Umsetzer-Mittel (MRE) und die zweiten Umsetzer-Mittel (MRS) jeweils aus einer Drehmatrix mit n Drehschritten, n Ausgängen und n Eingängen bestehen.

5. Schaltsystem nach Anspruch 3 oder 4, dadurch gekennzeichnet, daß die Zeitverschiebemittel für jede Eingangs-Schnittstelle (E1 bis E16) einen Reihen-Puffer (DE1 bis CE16) des Typs « erster Eingang — erster Ausgang » (FIFO), der die von einer Eingangs-Schnittstelle zugeführten Worte empfängt, und eine logische Schaltung zur Steuerung der Schreib-Lese-Operationen in dem genannten Reihen-Puffer enthalten, so daß der Reihenpuffer, wenn er nicht leer ist, am Ausgang ein Paket synchron mit einem äußeren Bezug (AIG) liefert.

6. Schaltsystem nach einem der Ansprüche 1 bis 5, dadurch gekennzeichnet, daß die Worte der Pakete die Form von Bytes haben, die parallel stromaufwärts den ersten Umsetzer-Mitteln (MRE) und in Serie stromabwärts den zweiten Umsetzer-Mitteln (MRS) zugeführt werden.

7. Schaltsystem nach Anspruch 4, dadurch gekennzeichnet, daß jedes Paket n Bytes oder ein ganzzahliges Vielfaches von n Bytes besitzt.

8. Schaltsystem nach Anspruch 1, dadurch gekennzeichnet, daß dieses n zusätzliche Eingangs-Schnittstellen besitzt, wobei die ersten Umsetzer-Mittel eine Schaltumg umfassen, die auf das Vorhandensein einer Information von den Eingangs-Schnittstellen zur Auswahl einer dieser Schnittstellen nach einem vorbestimmten Kriterium anspricht, wobei Mittel zur Umsetzung des Pakets von der ausgewählten Schnittstelle in Form von n parallel zugeführten Worten vorgesehen sind.

# FIG.1

BTL

UCC

[e,i]

MC

S  J

CO

E1  CE₁  L1

Ee  CEₑ  L1

E16  CE₁₆  L1

MX

S/P

L4

L6

L2

128

120

L7

128

MX1

E  L  E/L

MT

L9

128

P/S

L8

8

16

8

F₁  F₆  F₁₆

BTL

8

L10  8  p/s₁  S1

L10  8  p/s₆  S.6

L10  8  p/s₁₆  S.16

Ee  16  ---  2  1  8bits

1 paquet

11  11  11

16  16  16

E 16  Ee  E1

0 113 639

# FIG.2

0 113 639

# FIG.3

# FIG.4

FIG.5

FIG.6

adresses croissantes

FIG.7

FIG.8

0 113 639

# FIG.9

# FIG.10

# FIG.11

# FIG.12

# FIG.13

# FIG.14

# FIG.15

# FIG.16